# FASCICULE DE BREVET EUROPEEN

(11) **EP 0 715 068 B1**
(45) Date de publication et mention de la délivrance du brevet: **28.04.1999**
(21) Numéro de dépôt: 95402687.8
(22) Date de dépôt: 30.11.1995
(51) Int. Cl.: F02K 1/60

(54) **Inverseur de poussée à portes basculantes**
Schubumkehrvorrichtung mit schwenkbaren, gebogenen Klappen
Thrust reverser with pivoting doors

(30) Priorité: 30.11.1994 FR 9414341
(43) Date de publication de la demande: 05.06.1996
(73) Titulaire: Hispano-Suiza Aérostructures, 76700 Gonfreville l'Orcher (FR)
(72) Inventeur: Metezeau, Fabrice, Henri, Emile, F-76600-Le Havre (FR); Portal, Jean-Fabrice, Marcel, F-76310-Ste Adresse (FR)
(74) Mandataire: Berrou, Paul

(56) Documents cités:
- FR-A- 2 133 507
- FR-A- 2 166 296
- US-A- 2 757 510

## Description

La présente invention concerne un inverseur de poussée à obstacles aval pour turboréacteur.

FR-A-2 622 928 illustre un exemple d'inverseur de poussée disposé en position aval et réalisant l'inversion de poussée du flux secondaire ou flux froid d'un turboréacteur à double flux. Sur ce type d'inverseur, des obstacles aval ou coquilles, en plus d'assurer l'inversion soit du flux secondaire soit de l'ensemble des flux, forment également la tuyère d'éjection lors du fonctionnement en poussée directe. Le bord aval desdits obstacles constitue par conséquent dans ce cas l'extrémité aval de la paroi externe du canal, notamment du canal annulaire de circulation de la veine de flux secondaire dans l'application à un turboréacteur à double flux. Dans les réalisations connues de ce type, les obstacles sont montés pivotants sur la structure fixe de l'inverseur.

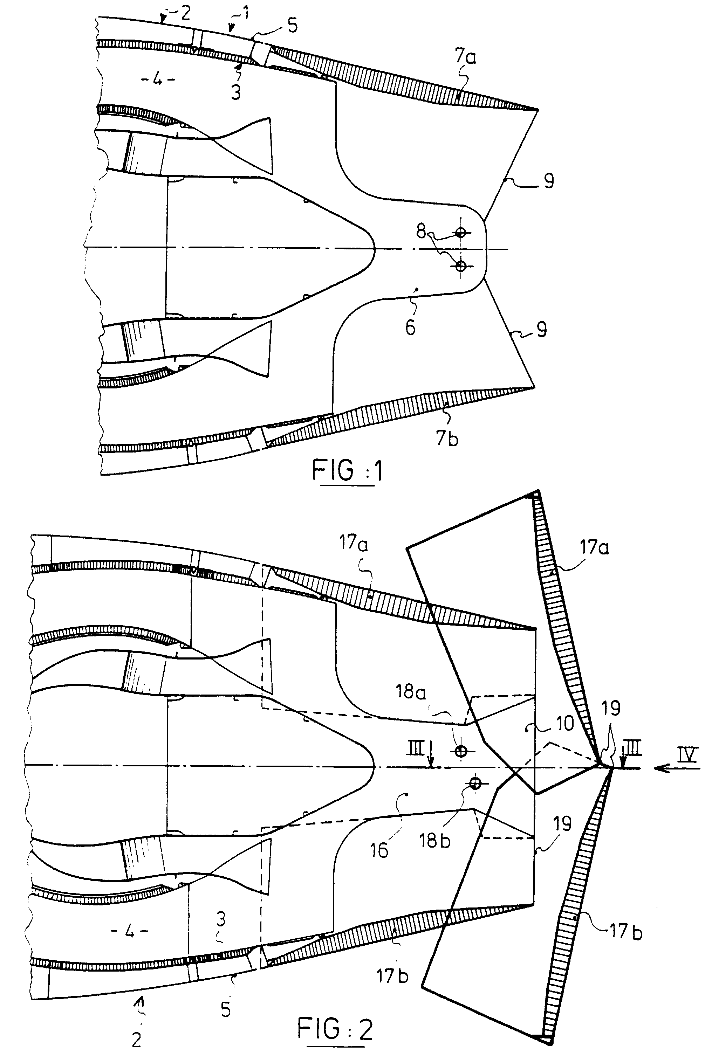

La figure 1 des dessins annexés montre un exemple de réalisation de ce type connu d'inverseur de poussée. L'inverseur de poussée est constitué dans ce cas d'une structure fixe amont 1 fixée sur le turboréacteur 2 ou sa nacelle et comportant une paroi interne 3 délimitant extérieurement le canal annulaire de circulation de la veine fluide, un carénage externe 5 fixé sur la paroi interne 3 et deux structures latérales 6. Deux obstacles aval 7a et 7b sont montés pivotants sur la structure fixe, notamment au moyen de pivots 8 portés par les structures latérales 6 qui supportent également un système de commande des déplacements et de verrouillage des obstacles 7a et 7b. L'extrémité aval 9 des obstacles 7a et 7b constituent le bord de fuite de la paroi externe, en prolongement vers l'aval du carénage 5, n'est pas coplanaire.

Un problème posé par ce type d'inverseur de poussée est de laisser subsister lors du fonctionnement en poussée directe lorsque les obstacles sont intégrés au canal dans le prolongement d'une partie fixe des pertes aérodynamiques qui peuvent être importantes et qui portent un grave préjudice à l'obtention des performances recherchées. Des solutions ont déjà été proposées pour tenter d'y remédier. Ainsi, FR-A-2 638 783 propose d'adjoindre à l'inverseur des volets latéraux mobiles, ce qui impose des articulations et présente l'inconvénient d'accroître la complexité préjudiciable à la fiabilité et d'augmenter la masse, à l'encontre de la réduction toujours recherchée pour des applications aéronautiques.

De même, FR-A-2 601 077 prévoit une structure fixe en aval des obstacles de l'inverseur. De ce fait, l'allongement du canal et les dispositions nécessaires pour permettre les déplacements des obstacles et l'obtention d'une ouverture suffisante en position d'inversion de poussée, en amont de ladite structure fixe entraînent également une augmentation de masse.

On connaît également par FR-A-2 672 339 une solution utilisant en plus des obstacles pivotants un élément en virole translatable disposée du côté aval, ce qui amène les inconvénients déjà relevés.

FR-A-2.166.296 décrit un turboréacteur dans lequel l'extrémité du corps de tuyère est entourée par un élément profilé qui présente un bord de fuite coplanaire.

Le but de l'invention est de réduire les pertes aérodynamiques, notamment à l'extrémité aval du canal, lors du fonctionnement en poussée directe, sans encourir les inconvénients d'accroissement de masse ou de complexification des solutions connues antérieures.

Un inverseur de poussée de turboréacteur à obstacles aval permettant de répondre à ces conditions est caractérisé en ce que dans la position intégrée dans la paroi externe du canal d'éjection du turboréacteur correspondant au fonctionnement en poussée directe, le bord de fuite constitué par l'extrémité aval des obstacles est coplanaire, contenu dans un plan transversal approximativement perpendiculaire à l'axe géométrique longitudinal de symétrie de l'inverseur et de rotation du turboréacteur.

Afin de permettre cette réalisation, plusieurs aménagements avantageux, applicables séparément ou en combinaison, sont décrits : décalage longitudinal dans la position respective des pivots des obstacles, forme particulière du bord de fuite des obstacles qui n'est pas de révolution, création de zones localisées en empochement sur les obstacles permettant un chevauchement en position d'inversion de poussée.

D'autres caractéristiques et avantages de l'invention seront mieux compris à la lecture de la description qui va suivre des modes de réalisation de l'invention, en référence aux dessins annexés sur lesquels :
- la figure 1 précédemment décrite représente selon une vue schématique en coupe longitudinale par un plan passant par l'axe de rotation la partie arrière d'un turboréacteur équipé d'un inverseur de poussée à obstacles aval antérieurement connu et que l'invention propose de modifier ;
- la figure 2 représente selon une vue schématique analogue à celle de la figure 1 un inverseur de poussée selon un premier mode de réalisation conforme à l'invention ;
- la figure 3 représente selon une vue en coupe par un plan passant par l'axe de rotation du turboréacteur et la ligne III-III de la figure 2, l'inverseur de poussée représenté sur la figure 2 dans la configuration correspondant à un fonctionnement en inversion de poussée ;
- la figure 4 représente selon une vue suivant la flèche IV de la figure 2, vue de l'arrière du turboréacteur, l'inverseur de poussée représenté sur les figures 2 et 3, dans la position d'inversion de poussée ;
- la figure 5 représente selon une vue schématique analogue à celles des figures 1 et 2 un inverseur de poussée selon un deuxième mode de réalisation de l'invention ;
- la figure 6 représente une vue suivant la flèche VI de la figure 5, vue de l'arrière du turboréacteur, l'inverseur de poussée de la figure 5, les traits pleins correspondant à la position de poussée directe et les traits fins correspondant à la position d'inversion de poussée ;
- la figure 7 représente selon une vue schématique analogue à celle des figures 1, 2 et 5 un inverseur de poussée selon un troisième mode de réalisation de l'invention, dans la position de poussée directe ;
- la figure 8 représente selon la même vue l'inverseur de poussée représenté sur la figure 7, dans la position d'inversion de poussée ;
- la figure 9 montre un détail de la figure 8 selon une vue en coupe par un plan passant par la ligne IX-IX.

La figure 2, sur laquelle on a conservé les mêmes repères que sur la figure 1 pour les éléments connus de l'inverseur de poussée de turboréacteur de réalisation antérieure et les repères des éléments analogues conformes à l'invention ont été augmentés d'une dizaine, montre un premier mode de réalisation de l'invention. On retrouve, comme précédemment décrit en référence à la figure 1 pour un inverseur de poussée de réalisation connue antérieure, la structure fixe amont 1 fixée sur le turboréacteur 2 et comportant une paroi interne 3 délimitant le canal 4 et un carénage externe 5. De manière remarquable, conforme à l'invention, les éléments déplaçables de l'inverseur ou obstacles 17a et 17b, au nombre de deux dans l'exemple représenté sur les dessins, ont leur extrémité aval constituant le bord de fuite 19 du canal d'éjection des gaz lors du fonctionnement en poussée directe coplanaire et contenu dans un plan transversal approximativement perpendiculaire à l'axe de symétrie de l'inverseur ou axe de rotation du turboréacteur. Cette disposition remarquable est obtenue grâce à un décalage dans une direction longitudinale entre les pivots 18a de l'obstacle 17a et les pivots 18b de l'obstacle 17b. Les aménagements apportés aux parties arrières 10 des structures latérales fixes 16 de l'inverseur permettant le débattement des obstacles 17a et 17b entre la position intégrée à la paroi du canal 4 en poussée directe et la position déployable de déviation du flux en inversion de poussée, telles que schématiquement représentées sur la figure 2, les figures 3 et 4 montrant également les obstacles 17a et 17b en position déployée. Un système connu en soi et non représenté sur les dessins comportant des vérins est utilisé pour la commande des déplacements des obstacles 17a et 17b et pour assurer leur verrouillage.

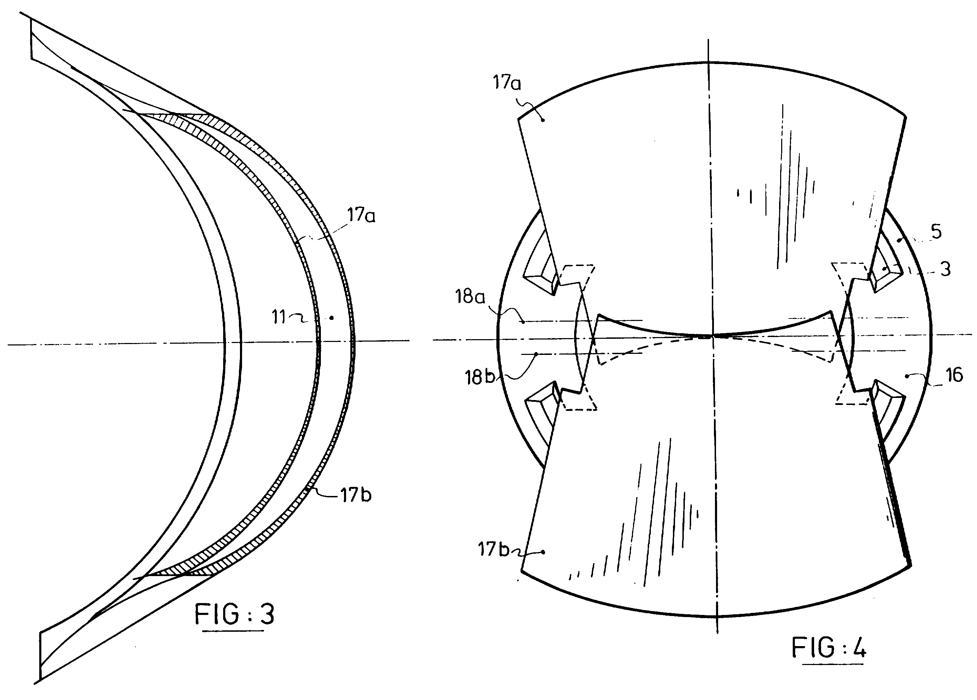

En position d'inversion de poussée, quelques fuites sont tolérées aux extrémités 19 des obstacles 17a et 17b. La zone 11 des fuites entre les deux obstacles 17a et 17b apparait également sur la figure 3. Toutefois, le dimensionnement des obstacles 17a et 17b et notamment un prolongement de leur bord de fuite vers l'arrière permet de réduire le jeu entre les obstacles 17a et 17b en position déployée et en conséquence de réduire les fuites et de les rendre acceptables compte-tenu de l'efficacité de l'inversion et des performances correspondantes.

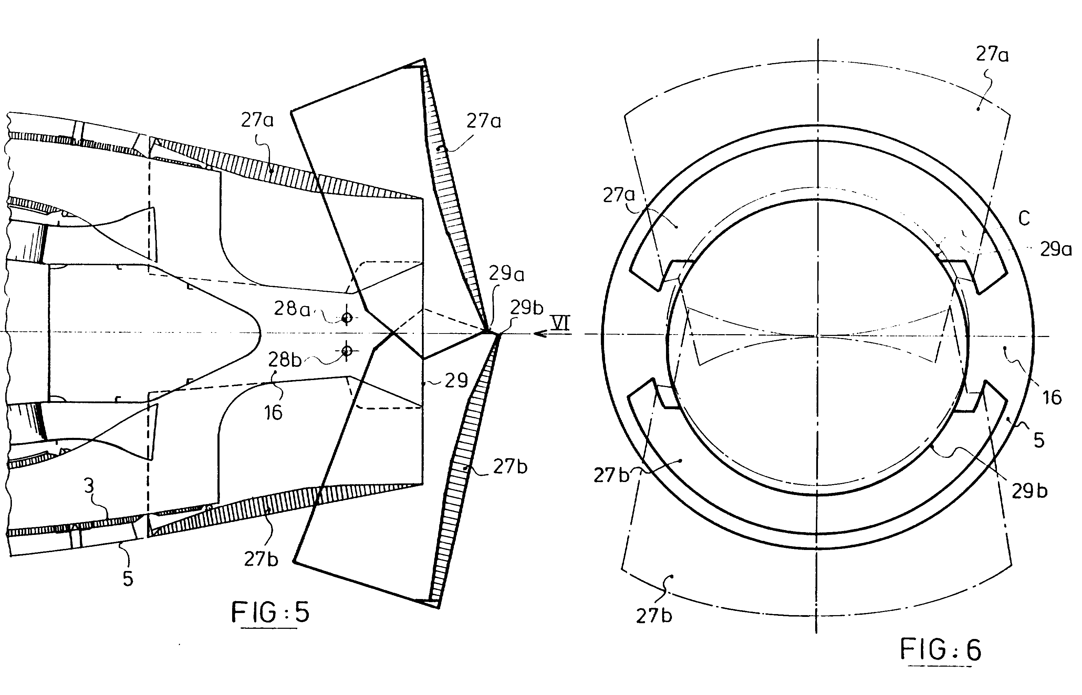

Selon un deuxième mode de réalisation de l'invention, représenté sur les figures 5 et 6, la coplanarité du bord de fuite 29 à l'extrémité aval des obstacles 27a et 27b en position de poussée directe, dans un plan transversal approximativement perpendiculaire à l'axe du turboréacteur est obtenue grâce à la forme particulière de ladite extrémité 29 qui n'est pas de révolution ou qui n'est pas coaxiale à l'axe de révolution du moteur. Le bord 29a de l'obstacle 27a et le bord 29b de l'obstacle 27b sont représentés sur la figure 6, montrant le décalage de forme par rapport au cercle C de référence. Ces dispositions en conservant la coplanarité en position de poussée directe permettent d'éviter toute interférence entre les obstacles 27a et 27b lors du passage en position déployée correspondant au fonctionnement en inversion de poussée. Les pivots 28a et 28b des obstacles 27a et 27b peuvent dans ce cas être contenus dans le même plan transversal. Par contre les aménagements apportés aux parties arrières 10 des structures latérales fixes 16 de l'inverseur dans la réalisation représentée sur les figures 2 à 4 peuvent également être conservés pour faciliter le débattement des obstacles 27a et 27b. Comme précédemment on observe à nouveau quelques fuites entre les bords 29a et 29b des obstacles 27a et 27b dans leur position déployée, ces fuites restant également d'un niveau acceptable.

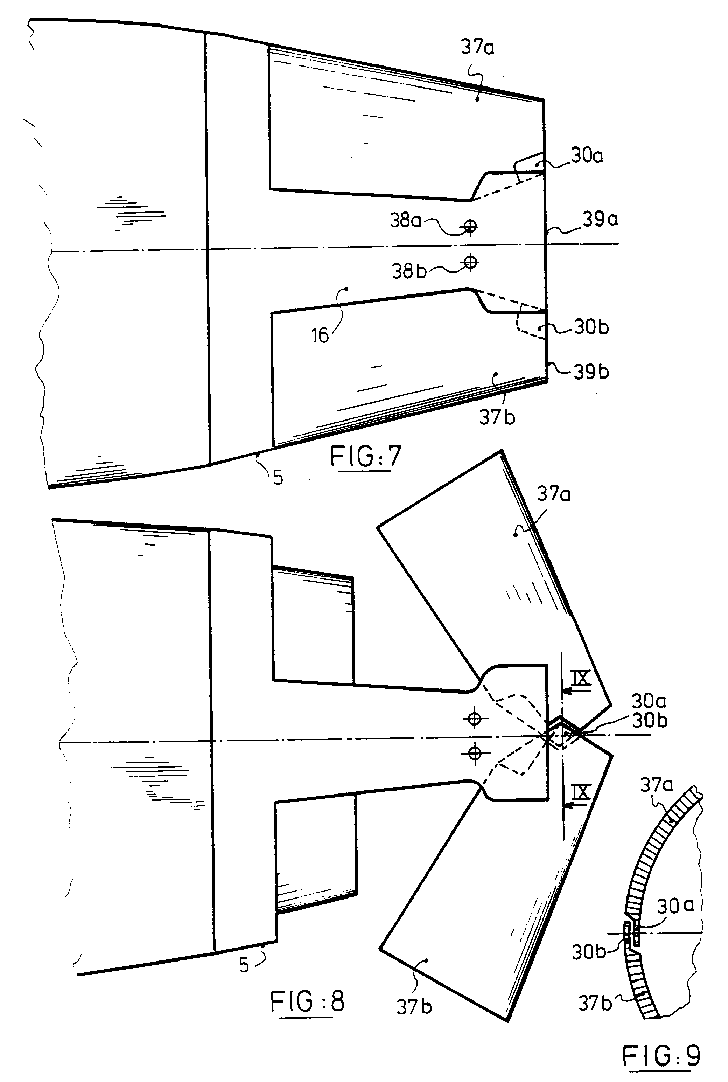

Selon un troisième mode de réalisation de l'invention, représenté sur les figures 7 et 8, comme précédemment décrit pour le premier mode en référence aux figures 2 à 4 et pour le deuxième mode en référence aux figures 5 et 6, les bords de fuite 39a et 39b à l'extrémité des obstacles 37a et 37b sont coplanaires et contenus dans un plan transversal approximativement perpendiculaire à l'axe du turboréacteur. Afin d'éviter toute interférence entre les obstacles 37a et 37b lors du passage à la position déployée, comme représenté sur la figure 8, des zones localisées 30a et 30b desdits obstacles 37a et 37b sont modifiées en ménageant à ces endroits des empochements ou réductions d'épaisseur permettant un recouvrement en emboîtement tel que les obstacles 37a et 37b se chevauchent sur ces zones 30a et 30b dans la position déployée, comme schématisé sur la figure 9. Les zones localisées 30a et 30b restent d'étendue très limitée si l'on admet que les obstacles 37a et 37b ne sont pas jointifs en position déployée et que des fuites sont acceptées en inversion de poussée. Une compensation peut dans ce cas être obtenue en améliorant l'efficacité du flux inversé et en diminuant l'angle d'ouverture des obstacles 37a et 37b. Dans les applications où, comme dans l'exemple représenté sur les figures 7 et 8, les obstacles sont au nombre de deux, deux zones de chevauchement doivent être ménagées mais en respectant la symétrie, les obstacles 37a et 37b peuvent rester identiques.

Les différents moyens conformes à l'invention permettant d'obtenir un bord de fuite coplanaire à l'extrémité aval des obstacles d'inverseur de poussée lors du fonctionnement en poussée directe peuvent en outre être combinés dans une même réalisation, conforme à l'invention, permettant une optimisation des performances en fonction des objectifs de masse et des résultats recherchés en poussée directe et en inversion de poussée.

Les exemples de réalisation de l'invention ont été représentés sur les dessins dans le cas d'application à un inverseur de poussée associé à un turboréacteur à double flux mais l'invention reste applicable quel que soit le turboréacteur associé à un inverseur de poussée dont les obstacles constituent l'extrémité aval du canal d'éjection des gaz en poussée directe.

## Revendications

1. Inverseur de poussée de turboréacteur comportant des obstacles déplaçables (17a, 17b ; 27a, 27b ; 37a, 37b) intégrés, lors du fonctionnement du turboréacteur en poussée directe, à la paroi externe du canal d'éjection du turboréacteur en formant l'extrémité aval de la tuyère d'éjection et, en position déployée, constituant des obstacles de déviation du flux des gaz en procurant une inversion de poussée, lesdits obstacles (17a, 17b ; 27a, 27b ; 37a, 37b) étant montés pivotants au moyen de pivots (18a, 18b; 28a, 28b ; 38a, 38b) portés par des structures latérales fixes (16) qui supportent également un système de commande des déplacements et de verrouillage desdits obstacles caractérisé en ce que, dans la position intégrée dans la paroi externe du canal d'éjection du turboréacteur correspondant au fonctionnement en poussée directe, le bord de fuite (19, 29, 39a, 39b) constitué par l'extrémité aval des obstacles (17a, 17b ; 27a, 27b ; 37a, 37b) est coplanaire, contenu dans un plan transversal approximativement perpendiculaire à l'axe longitudinal géométrique de symétrie de l'inverseur et de rotation du turboréacteur.

2. Inverseur de poussée de turboréacteur selon la revendication 1 dans lequel lesdits obstacles (17a, 17b) sont au nombre de deux et un décalage suivant une direction longitudinale parallèle à l'axe de rotation du turboréacteur est introduit dans la position respective des pivots (18a) d'un obstacle (17a) par rapport aux pivots (18b) de l'autre obstacle (17b) de manière à assurer la coplanarité des bords de fuite (19) desdits obstacles (17a, 17b) en poussée directe.

3. Inverseur de poussée de turboréacteur selon l'une des revendications 1 ou 2 dans lequel lesdits obstacles (27a, 27b) sont au nombre de deux et l'extrémité aval des obstacles (27a, 27b) constituant le bord de fuite (29) de la tuyère d'éjection présente une forme particulière qui n'est pas de révolution ou qui n'est pas coaxiale à l'axe de révolution du moteur de manière à être coplanaire en poussée directe.

4. Inverseur de poussée de turboréacteur selon l'une quelconque des revendications 1 à 3 dans lequel lesdits obstacles (37a, 37b) sont au nombre de deux et les bords de fuite desdits obstacles (37a, 37b) sont coplanaires en poussée directe et des zones localisées (30a, 30b) sont aménagées sur les obstacles (37a, 37b) en formant des empochements de manière à obtenir lors du passage en position déployée d'inversion de poussée un chevauchement entre les obstacles (37a, 37b) par emboîtement desdites zones localisées (30a, 30b) de façon à éviter toute interférence entre les obstacles (37a, 37b).

5. Inverseur de poussée de turboréacteur selon l'une quelconque des revendications 2 à 4 dans lequel les parties arrière (10) des structures latérales fixes (16) sont aménagées de manière à permettre le débattement des obstacles (17a, 17b) sans interférence lors du passage en position déployée assurant l'inversion de poussée.

## Patentansprüche

1. Schubumkehrvorrichtung für Tl-Triebwerke mit bewegbaren Klappen (17a, 17b; 27a, 27b; 37a, 37b), die bei Betrieb des Tl-Triebwerks im Direktschub in die Außenwand des Schubkanals des Tl-Triebwerks integriert sind, wobei sie das hintere Ende der Schubdüse bilden, und in ausgeklappter Stellung Umlenkklappen für den Gasstrom bilden, indem sie eine Schubumkehr bewirken, wobei die genannten Klappen (17a, 17b; 27a, 27b; 37a, 37b) mittels Drehzapfen (18a, 18b; 28a, 28b; 38a, 38b), die von festen Seitenstrukturen (16) gehalten werden, die auch ein Steuersystem zum Bewegen und Verriegeln der genannten Klappen tragen, schwenkbar angebracht sind,
**dadurch gekennzeichnet, daß** in der integrierten Stellung in der Außenwand des Schubkanals des Tl-Triebwerks, die dem Betrieb im Direktschub entspricht, die von dem stromabwärtigen Ende der Klappen (17a, 17b; 27a, 27b; 37a, 37b) gebildete Austrittskante (19, 29, 39a, 39b) koplanar ist und in einer quer verlaufenden Ebene liegt, die annähernd senkrecht zur geometrischen Längssymmetrieachse der Umkehrvorrichtung und Rotationsachse des Tl-Triebwerks verläuft.

2. Schubumkehrvorrichtung für Tl-Triebwerke nach Anspruch 1, wobei die genannten Klappen (17a, 17b) zwei an der Zahl sind und ein Versetzen der jeweiligen Position der Drehzapfen (18a) einer Klappe (17a) gegenüber den Drehzapfen (18b) der anderen Klappe (17b) in einer Längsrichtung parallel zur Rotationsachse des Tl-Triebwerks dergestalt vorgesehen ist, daß die Koplanarität der Austrittskante (19) dieser Klappen (17a, 17b) im Direktschub gewährleistet ist.

3. Schubumkehrvorrichtung für Tl-Triebwerke nach einem der Ansprüche 1 oder 2, wobei die genannten Klappen (27a, 27b) zwei an der Zahl sind und das hintere Ende der Klappen (27a, 27b), das die Austrittskante (29) der Schubdüse bildet, eine besondere Form aufweist, die keine Rotation vollführt bzw. nicht koaxial zur Rotationsachse des Motors ist, so daß es im Direktschub koplanar ist.

4. Schubumkehrvorrichtung für Tl-Triebwerke nach einem der Ansprüche 1 bis 3, wobei die genannten Klappen (37a, 37b) zwei an der Zahl sind und die Austrittskanten dieser Klappen (37a, 37b) im Direktschub koplanar sind und örtlich begrenzte Bereiche (30a, 30b) an den Klappen (37a, 37b) durch Formen von Vertiefungen dergestalt vorgesehen werden, daß beim Wechsel in die ausgeklappte Schubumkehrstellung ein gegenseitiges Überdecken der Klappen (37a, 37b) durch Übereinanderschieben dieser örtlich begrenzten Bereiche (30a, 30b) erzielt wird und damit jedes gegenseitige Behindern der Klappen (37a, 37b) vermieden wird.

5. Schubumkehrvorrichtung für Tl-Triebwerke nach einem der Ansprüche 2 bis 4, wobei die hinteren Abschnitte (10) der festen Seitenstrukturen (16) dergestalt ausgeführt sind, daß sie beim Wechsel in die ausgeklappte Stellung, die die Schubumkehr gewährleistet, den Ausschlag der Klappen (17a, 17b) ohne gegenseitiges Behindern ermöglichen.

## Claims

1. Jet engine thrust reverser comprising moveable obstacles (17a, 17b; 27a, 27b; 37a, 37b) which, when the jet engine is operating with direct thrust, are integrated into the external wall of the jet engine jet pipe, forming the downstream end of the jet pipe, and which, when deployed, constitute obstacles for deflecting the flow of gases, providing reverse thrust, the said obstacles (17a, 17b; 27a, 27b; 37a, 37b) being mounted so that they can pivot by means of pivots (18a, 18b; 28a, 28b; 38a, 38b) borne by stationary lateral structures (16) which also support a system for controlling the movements of and for locking the said obstacles, characterized in that, in the position integrated into the external wall of the jet engine jet pipe that corresponds to operation in direct thrust mode, the trailing edge (19, 29, 39a, 39b) consisting of the downstream end of the obstacles (17a, 17b; 27a, 27b; 37a, 37b) is coplanar, contained in a transverse plane approximately perpendicular to the geometric longitudinal axis of symmetry of the reverser and axis of rotation of the jet engine.

2. Jet engine thrust reverser according to Claim 1, in which the said obstacles (17a, 17b) are two in number and an offset in a longitudinal direction parallel to the axis of rotation of the jet engine is introduced into the respective position of the pivots (18a) of one obstacle (17a) with respect to the pivots (18b) of the other obstacle (17b) so as to ensure that the trailing edges (19) of the said obstacles (17a, 17b) are coplanar in direct thrust mode.

3. Jet engine thrust reverser according to either of Claims 1 and 2, in which the said obstacles (27a, 27b) are two in number and the downstream end of the obstacles (27a, 27b), constituting the trailing edge (29) of the jet pipe has a special shape which does not have symmetry of revolution or which is not coaxial with the axis of revolution of the engine, so as to be coplanar in direct thrust mode.

4. Jet engine thrust reverser according to any one of Claims 1 to 3, in which the said obstacles (37a, 37b) are two in number and the trailing edges of the said obstacles (37a, 37b) are coplanar in direct thrust mode and localized regions (30a, 30b) are contrived on the obstacles (37a, 37b) to form recesses so that when moving into the deployed thrust-reversal position, the obstacles (37a, 37b) can overlap by the said localized regions (30a, 30b) nesting together so as to prevent any interference between the obstacles (37a, 37b).

5. Jet engine thrust reverser according to any one of Claims 2 to 4, in which the rear parts (10) of the stationary lateral structures (16) are contrived in such a way to allow the obstacles (17a, 17b) to swing without interference when moving into the deployed position for reversing the thrust.
